# EUROPÄISCHE PATENTSCHRIFT

(11) **EP 0 757 197 B1**
(45) Veröffentlichungstag und Bekanntmachung des Hinweises auf die Patenterteilung: **17.03.1999**
(21) Anmeldenummer: 95112015.3
(22) Anmeldetag: 31.07.1995
(51) Int. Cl.: F16K 11/07, A47L 17/00, B05B 1/16

(54) **Griff an oder für eine Handbrause**
Handle on or for a hand-held shower
Poignée à ou pour une douche à main

(43) Veröffentlichungstag der Anmeldung: 05.02.1997
(73) Patentinhaber: Schmidt & Lenhardt GmbH & Co. oHG, 88316 Isny (DE)
(72) Erfinder: Janisch, Klaus, D-88316 Isny (DE)
(74) Vertreter: Schneck, Herbert, Dipl.-Phys., Dr.

(56) Entgegenhaltungen:
- EP-A- 0 546 425
- EP-A- 0 607 479
- EP-A- 0 656 503
- EP-A- 0 659 490
- DE-A- 3 700 927

## Beschreibung

Die Erfindung betrifft einen Griff an einer oder für eine Handbrause, die einen hohlen Schaft aufweist, der sich von einem Einlaßende mit Außengewindeanschluß zu einem Auslaßende mit einem Brausekopf querschnittsmäßig erweitert.

Die DE-A-3700927 zeigt eine Handbrause mit einem länglichen Griff, der in einem Brausekopf endet, an dem ein Drehkopf angeordnet ist, der zwei Drehstellungen aufweist, in dessen einer die Auslaßbrause mit dem hohlen Innenraum des Schaftes kommuniziert und dessen anderer Drehstellung der Auslaß abgesperrt ist.

Die EP-A-0656503 zeigt eine Geschirrbrause mit einem geraden zylindrischen Schaft, an dem ein koaxialer Brausekopf unter Zwischenschaltung eines Absperrventils befestigt ist, welches mit einem Schwenkhebel geöffnet werden kann.

Aus der EP-A-0659490 ist eine Handbrause bekannt, die einen Griff mit Brausekopf aufweist, wobei im Brausekopf ein Steuerventil angeordnet ist, das durch eine Fingertaste betätigt werden kann. Das Ventil dient hier aber nicht zum Absperren des Wasserdurchlasses, sondern zum Umschalten zwischen einem zentralen Ausgang und einem, diesen umgebenden Düsenkranz.

Für Behinderte, die ihre Körperbewegungen häufig nur unvollkommen steuern können, ist die Betätigung der bekannten Handbrausen problematisch. Der Behinderte muß mit einer Hand den Griff der Handbrause halten und mit der anderen Hand das Betätigungsorgan des Absperrventils der Handbrause ergreifen und in einer ganz bestimmten Richtung bewegen.

Die Handbrause gemäß EP-A-0656503 ist für diesen Einsatz besonders ungeeignet, weil der Schwenkhebel von den Behinderten mit einer Hand ständig gegen Federkraft niedergedrückt gehalten werden muß, während er die Brause selbst am Griff mit der anderen Hand festhält. Der Behinderte muß also ständig beide Hände an der Brause haben, was für die Handhabung äußerst unpraktisch ist, ganz abgesehen davon, daß auch Verletzungsgefahr besteht, weil die Finger der den Griff umspannenden Hand unter den Schwenkhebel gelangen können, so daß beim Niederdrücken des Schwenkhebels Einklemmgefahr besteht. Der eingangs genannte Stand der Technik gemäß DE-A-3700927 erfordert von den Behinderten, daß er mit einer Hand den Griff der Brause hält und dann mit den Fingern der anderen Hand den stirnseitigen Drehknopf erfaßt und in die Offenstellung verdreht. Diese nacheinander erfolgenden kontrollierten Bewegungen können Behinderte aber häufig nicht ausführen.

Aufgabe der Erfindung ist es, eine Handbrause bzw. den Griff für eine solche Brause so auszubilden, daß für behinderte Personen eine unproblematische Betätigung der Handbrause geschaffen wird.

Diese Aufgabe wird durch die Merkmale der Ansprüche 1 und 2 gelöst.

Gemäß Anspruch 1 ist der Griff Bestandteil des Schaftes der Handbrause und gemäß Anspruch 2 stellt der Griff ein Zubehörteil dar, das an herkömmliche Handbrausen angeschraubt werden kann.

Die axiale Verschiebbarkeit eines Steuerschiebers in einer zylindrischen Hülse ist aus der EP-A-0607479 bekannt. Dabei handelt es sich aber um ein Schaltventil zum Umschalten der Druckwasserversorgung zwischen zwei Verbrauchern. Die Wasseranschlüsse liegen rechtwinklig zur Axialrichtung des Steuerschiebers. Der Steuerschieber wird mechanisch von einer Wippe hin- und herbewegt. Dieses Schaltventil zeigt keine axial verschiebbare Griffhülse und ist deswegen ebenfalls für die Ausbildung eines Griffes einer Handbrause nicht geeignet.

Der wesentliche Vorteil der Erfindung besteht darin, daß der Behinderte die Handbrause an der Griffhülse halten kann und ohne daß er seine zweite Hand zu Hilfe nehmen muß, die Brause aktivieren kann, in dem er den Brausekopf gegen die Badewanne oder seinen Körper drückt. Dabei verschiebt sich die Griffhülse relativ zum Schaft und das Absperrventil öffnet. Die erfindungsgemäß mit dem neuartigen Griff ausgestattete Handbrause ermöglicht also eine Ein-Hand-Bedienung.

Gemäß einer Weiterbildung der Erfindung weist die Griffhülse an beiden Enden je einen großflächigen Ringflansch auf. Der dazwischen liegende Bereich der Griffhülse ist abwechselnd mit ringförmigen Erhöhungen und ringförmigen Vertiefungen versehen, so daß eine drehteilartige Oberfläche mit gewellter Längskontur geschaffen wird. Die Ringflansche haben einen erheblich größeren Außendurchmesser, als der dazwischen liegende Griffbereich. Für den Behinderten, für den es schon schwierig ist, den Griff der Brause an der richtigen Stelle zu erfassen, geben die beiden Ringflansche eine Positionierhilfe. Die Ringflansche dienen aber auch dazu, die Griffhülse z.B. mit dem Handballen oder dem Handgelenk zu verschieben, wenn der Behinderte seine Finger nicht mehr bewegen kann.

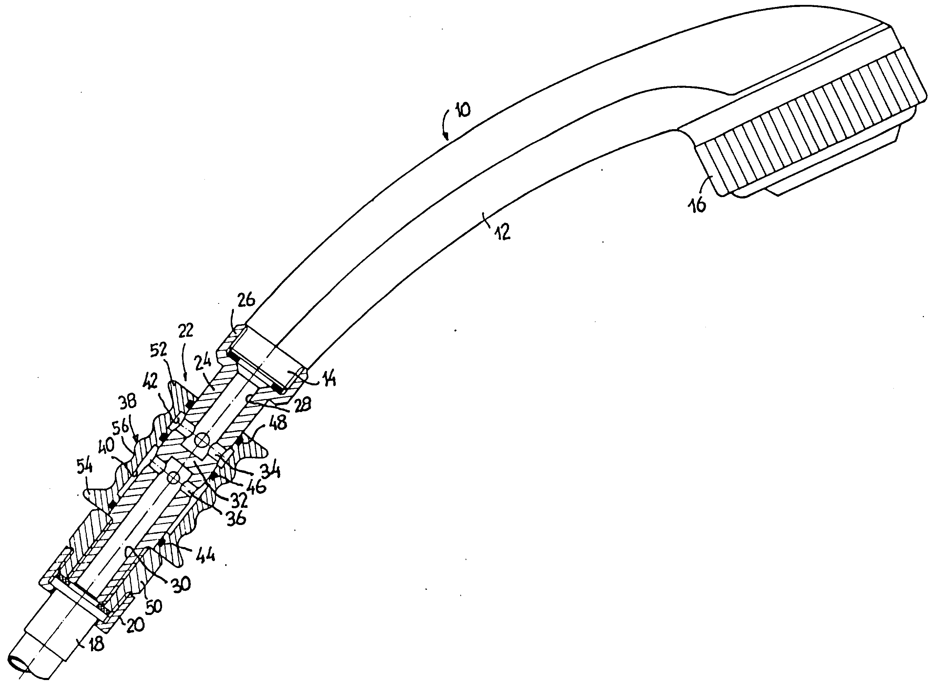

Anhand der Zeichnung, die ein Ausführungsbeispiel darstellt, wird die Erfindung näher beschrieben.

Die einzige Figur zeigt eine Schnittansicht eines an der Handbrause befestigten Griffes mit Absperrschieber.

Eine Handbrause 10 besteht aus einem hohlen Schaft 12, der einlaßseitig einen Außengewindeabschnitt 14 und auslaßseitig einen Brausekopf 16 aufweist. Eine solche Handbrause 10 ist handelsüblich und kann mit einer Gewindehülse 20 eines Brauseschlauches 18 verschraubt werden.

Nach der Erfindung ist die Handbrause 10 mit einem Griff 22 verschraubt, der ein Rohrstück 24 mit einer Kupplungsmuffe 26 aufweist, welche letztere ein Innengewinde aufweist, das auf das Außengewinde des Brausenanschlusses 14 paßt. Das Rohrstück 24 weist zwei koaxiale Sacklöcher 28, 30 auf, die an einer Querwand 32 enden und benachbart dieser Querwand jeweils mit Querbohrungen 34, 36 kommunizieren, die an der Außenfläche des Rohrstückes 24 münden.

Das Rohrstück 24 hat eine kreiszylindrische Außenfläche, auf der eine Griffhülse 38 axial verschiebbar geführt ist, deren Durchgangsbohrung im Durchmesser der Außenfläche des Rohrstückes 24 entspricht. Von dieser Durchgangsbohrung gehen zwei Ringnuten 40, 42 aus. Drei O-Ringe 44, 46, 48 dichten die beiden Ringnuten 40, 42 gegenüber dem Rohrstück 24 ab. Die Ringnut 40 hat eine größere axiale Länge als die Ringnut 42 und reicht in der Offenstellung des Absperrventils über beide Gruppen von Querbohrungen 34, 36. Diese Offenstellung ist dadurch definiert, daß die Griffhülse 38 an der rückseitigen Radialfläche der Anschlußmuffe 26 anliegt. Die Figur zeigt die Griffhülse in ihrer Absperrstellung, in der sie an einem Gewindestück 50 anliegt, das auf einen Gewindeabschnitt am Einlaufende des Rohrstückes 24 aufgeschraubt ist. Dieses Gewindestück 50 trägt am Ende einen Außengewindeabschnitt entsprechend demjenigen der Handbrause 10. Somit kann der Verbindungsschlauch mit Schraubhülse 20 am Einlaßende des Griffes 22 aufgeschraubt werden. Abgesehen von den drei O-Ringen besteht also der Griff 22 lediglich aus drei Teilen, nämlich dem Rohrstück 24, der Griffhülse 38 und dem Gewindestück 50.

Die Griffhülse 38 hat zwei großflächige Endflansche 52, 54 an deren Stirnseiten und einen dazwischen liegenden Griffabschnitt 56, der in seiner Kontur gewellt ist. Alle Teile des Griffes 22 sind Rotationskörper, wenn man von den Querbohrungen 34, 36 absieht.

Für die Absperrfunktion des Absperrventils würden die beiden O-Ringe 44, 46 ausreichen. Der dritte O-Ring 48 verhindert, daß beim Verschieben der Griffhülse 38 Druckwasser zwischen Griffhülse und Rohrstück austritt. An die zweite schmalere Ringnut 42 kann eine Entlüftungs- oder Entleerungsleitung angeschlossen werden, um Wasser aus der Handbrause 10 zu entfernen.

Der Griff 22 kann in einer alternativen Ausführung mit der Handbrause 10 einstückig ausgebildet sein, wobei dann die Verschraubung 14, 26 entfällt, das Rohrstück 24 also eine einstückige Verlängerung des Schaftes 12 bildet.

## Patentansprüche

1. Griff einer Handbrause (10), die einen hohlen Schaft (12) aufweist, der sich von einem Einlaßende mit Außengewindeanschluß (14) zu einem Auslaßende mit Brausekopf (16) querschnittsmäßig erweitert, **dadurch gekennzeichnet, daß** der Griff (22) rotationssymmetrisch ausgebildet ist und eine, auf einem Rohrstück (24) zwischen einer Offenstellung und einer Absperrstellung axial verschiebbare Griffhülse (38) aufweist, das Rohrstück (24) zwei jeweils stirnseitig mündende koaxiale Sacklöcher (28, 30) aufweist, die nach innen bis zu einer Radialwand (32) des Rohrstückes (24) reichen und benachbart dieser Radialwand (32) in Querbohrungen (34, 36) münden und daß in der Griffhülse (38) eine koaxiale Durchgangsbohrung mit einem Durchmesser gleich dem Außendurchmesser des Rohrstückes (24) gebildet ist, die eine Ringnut (40) mit einer solchen axialen Länge aufweist, daß diese in der Offenstellung der Griffhülse (38) mit den Querbohrungen (34, 36) beider Sacklöcher (28, 30) kommuniziert, daß in der Griffhülse (38) beidseitig der Ringnut (40) jeweils ein O-Ring (44, 46) und ein dritter O-Ring (48) am brausenseitigen Ende der Griffhülse das Rohrstück (24) abdichtend umgeben, und daß das Rohrstück (24) einstückiger Bestandteil des Schaftes (12) ist, wobei dessen Einlaßende dem Rohrstück (24) zugeordnet ist.

2. Griff für eine Handbrause (10), die einen hohlen Schaft (12) aufweist, der sich von einem Einlaßende mit Außengewindeanschluß (14) zu einem Auslaßende mit Brausekopf (16) querschnittsmäßig erweitert, **dadurch gekennzeichnet, daß** der Griff (22) rotationssymmetrisch ausgebildet ist und eine, auf einem Rohrstück (24) zwischen einer Offenstellung und einer Absperrstellung axial verschiebbare Griffhülse (38) aufweist, das Rohrstück (24) zwei jeweils stirnseitig mündende koaxiale Sacklöcher (28, 30) aufweist, die nach innen bis zu einer Radialwand (32) des Rohrstückes (24) reichen und benachbart dieser Radialwand (32) in Querbohrungen (34, 36) münden und daß in der Griffhülse (38) eine koaxiale Durchgangsbohrung mit einem Durchmesser gleich dem Außendurchmesser des Rohrstückes (24) gebildet ist, die eine Ringnut (40) mit einer solchen axialen Länge aufweist, daß diese in der Offenstellung der Griffhülse (38) mit den Querbohrungen (34, 36) beider Sacklöcher (28, 30) kommuniziert, daß in der Griffhülse (38) beidseitig der Ringnut (40) jeweils ein O-Ring (44, 46) und ein dritter O-Ring (48) am brausenseitigen Ende der Griffhülse das Rohrstück (24) abdichtend umgeben, und daß das Rohrstück (24) an einem Einlaßende einen Außengewindeanschluß (50) gleich demjenigen des Schaftes (12) und an seinem gegenüberliegenden Auslaßende eine dazu komplementäre Innengewindekupplung (26) aufweist.

3. Griff nach Anspruch 2, **dadurch gekennzeichnet, daß** die Innengewindekupplung (26) des Rohrstückes (24) aus einer, an diesem angeformten Muffe mit Innengewinde besteht.

4. Griff nach einem der Ansprüche 1 bis 3, **dadurch gekennzeichnet, daß** die Griffhülse (38) an beiden Enden je einen großflächigen Ringflansch (52, 54) aufweist.

5. Griff nach einem der Ansprüche 1 bis 4, **dadurch gekennzeichnet, daß** die Mantellinie der Griffhülse (38) abwechselnde Erhöhungen und Vertiefungen aufweist.

6. Griff nach Anspruch 5, **dadurch gekennzeichnet, daß** - im Axialschnitt gesehen - die Erhöhungen konvex und die Vertiefungen konkav gekrümmt sind und stetig ineinander übergehen.

## Claims

1. A handle of a hand shower (10) which comprises a hollow shaft (12) expanding in cross-section from an inlet end with an externally threaded connection (14) towards an outlet end with a shower head (16), **characterized in that** the handle (22) is rotationally symmetrical and comprises a handle sleeve (38) axially displaceable on a pipe section (24) between an on-position and a shut-off position; in that the pipe section (24) comprises two coaxial blind holes (28, 30) which discharge frontally and which extend inwards as far as to a radial wall (32) of the pipe section (24) and open into transverse bores (34, 36) in vicinity to this radial wall (32); and in that a coaxial through hole is formed in the handle sleeve (38), having a diameter equal to the outside diameter of the pipe section (24) and an annular groove (40) of such an axial length that, in the on-position of the handle sleeve (38), this annular groove (40) communicates with the transverse bores (34, 36) of both blind holes (28, 30); in that in the handle sleeve (38), provision is made for one O-ring (44, 46) on either side of the annular groove (40) and for a third O-ring (48) at the end, on the shower side, of the handle sleeve, which sealingly surround the pipe section (24); and in that the pipe section (24) is an integral component of the shaft (12), the latter's inlet end being allocated to the pipe section (24).

2. A handle of a hand shower (10) which comprises a hollow shaft (12) expanding in cross-section from an inlet end with an externally threaded connection (14) towards an outlet end with a shower head (16), **characterized in that** the handle (22) is rotationally symmetrical and comprises a handle sleeve (38) axially displaceable on a pipe section (24) between an on-position and a shut-off position; in that the pipe section (24) comprises two coaxial blind holes (28, 30) which discharge frontally and which extend inwards as far as to a radial wall (32) of the pipe section (24) and open into transverse bores (34, 36) in vicinity to this radial wall (32); and in that a coaxial through hole is formed in the handle sleeve (38), having a diameter equal to the outside diameter of the pipe section (24) and an annular groove (40) of such an axial length that, in the on-position of the handle sleeve (38), this annular groove (40) communicates with the transverse bores (34, 36) of both blind holes (28, 30); in that in the handle sleeve (38), provision is made for one O-ring (44, 46) on either side of the annular groove (40) and for a third O-ring (48) at the end, on the shower side, of the handle sleeve, which sealingly surround the pipe section (24); and in that, on an inlet end, the pipe section (24) comprises an externally threaded connection (50) equal to that of the shaft (12) and, on its opposite outlet end, an internally threaded coupling (26) complementary thereto.

3. A handle according to claim 2, **characterized in that** the internally threaded coupling (26) of the pipe section (24) consists of a socket molded thereon and having an internal thread.

4. A handle according to one of claims 1 to 3, **characterized in that** the handle sleeve (38) comprises a large-surface annular flange (52, 54) at both ends.

5. A handle according to one of claims 1 to 4, **characterized in that** the surface line of the handle sleeve (38) comprises alternating elevations and impressions.

6. A handle according to claim 5, **characterized in that** - seen in an axial section - the elevations are convexly curved and the depressions are concavely curved, one passing into the other continuously.

## Revendications

1. Poignée d'une douche à main (10) qui comprend une tige (12) creuse se dilatant, en coupe transversale, d'une extrémité d'entrée avec un raccordement extérieurement fileté (14) vers une extrémité de sortie avec un arrosoir (16), **caractérisée en ce que** la poignée (22) est à symétrie de révolution et présente un manchon de poignée (38) axialement déplaçable sur une pièce de tuyau (24) entre une position ouverte et une position bloquée; en ce que la pièce de tuyau (24) présente deux trous borgnes (28, 30) coaxiaux qui débouchent frontalement et qui s'étendent intérieurement jusqu'à une paroi radiale (32) de la pièce de tuyau (24) et qui, dans le voisinage de cette paroi radiale (32), débouchent dans des trous transversaux (34, 36); et en ce que, dans le manchon de poignée (38), un trou de passage coaxial est formé qui présente un diamètre égal au diamètre extérieur de la pièce de tuyau (24) et une rainure annulaire (40) d'une telle longueur axiale que celle-ci communique avec les trous transversaux (34, 36) des deux trous borgnes (28, 30) dans la position ouverte du manchon de poignée (38); en ce que, dans le manchon de poignée (38), un O-ring et un autre (44, 46) des deux côtés de la rainure annulaire (40) et un troisième O-ring (48) du manchon de poignée, qui se trouve à l'extrémité du côté de la douche, entourent la pièce de tuyau (24) de façon étanche; et en ce que la pièce de tuyau (24) fait partie intégrante de la tige (12), dont l'extrémité de l'entrée est conjuguée à la pièce de tuyau (24).

2. Poignée d'une douche à main (10) qui comprend une tige (12) creuse se dilatant en coupe transversale d'une extrémité d'entrée avec un raccordement extérieurement fileté (14) vers une extrémité de sortie avec un arrosoir (16), **caractérisée en ce que** la poignée (22) est à symétrie de révolution et présente un manchon de poignée (38) axialement déplaçable sur une pièce de tuyau (24) entre une position ouverte et une position bloquée; en ce que la pièce de tuyau (24) présente deux trous borgnes (28, 30) coaxiaux qui débouchent frontalement et qui s'étendent intérieurement jusqu'à une paroi radiale (32) de la pièce de tuyau (24) et qui, dans le voisinage de cette paroi radiale (32), débouchent dans des trous transversaux (34, 36); et en ce que, dans le manchon de poignée (38), un trou de passage coaxial est formé qui présente un diamètre égal au diamètre extérieur de la pièce de tuyau (24) et une rainure annulaire (40) d'une telle longueur axiale que celle-ci communique avec les trous transversaux (34, 36) des deux trous borgnes (28, 30) dans la position ouverte du manchon de poignée (38); en ce que, dans le manchon de poignée (38), un O-ring et un autre (44, 46) des deux côtés de la rainure annulaire (40) et un troisième O-ring (48) du manchon de poignée, qui se trouve à l'extrémité du côté de la douche, entourent la pièce de tuyau (24) de façon étanche; et en ce que la pièce de tuyau (24), à une extrémité d'entrée, comprend un raccordement extérieurement fileté (50) égal à celui de la tige (12) et, à son extrémité opposée de sortie, un accouplement intérieurement fileté (26) et qui en est complémentaire.

3. Poignée selon la revendication 2, **caractérisée en ce que** l'accouplement intérieurement fileté (26) de la pièce de tige (24) consiste en un embout intérieurement fileté et moulé sur celle-ci.

4. Poignée selon l'une quelconque des revendications 1 à 3, **caractérisée en ce que** le manchon de poignée (38) présente une bride annulaire (52, 54) à grande surface sur ses deux extrémités.

5. Poignée selon l'une quelconque des revendications 1 à 4, **caractérisée en ce que** la génératrice du manchon de poignée (38) présente alternativement des élévations et dépressions.

6. Poignée selon la revendication 5, **caractérisée en ce que** - en section axiale - les élévations sont convexes et les dépressions sont concaves et passent l'une à l'autre de façon continue.
